# EUROPÄISCHE PATENTSCHRIFT

(11) **EP 0 889 864 B1**
(45) Veröffentlichungstag und Bekanntmachung des Hinweises auf die Patenterteilung: **13.06.2001**
(21) Anmeldenummer: 97914257.7
(22) Anmeldetag: 18.03.1997
(51) Int. Cl.: C04B 41/48, C09D 5/00

(54) **GRUNDIERUNGSPASTE**
PASTE FOR PRIMING PROCESS
PATE POUR UNE COUCHE DE FOND

(30) Priorität: 27.03.1996 DE 19612070
(43) Veröffentlichungstag der Anmeldung: 13.01.1999
(73) Patentinhaber: Henkel Kommanditgesellschaft auf Aktien, 40589 Düsseldorf-Holthausen (DE)
(72) Erfinder: LEDER, Manfred, D-40723 Hilden (DE); TAMCKE, Thomas, D-40593 Düsseldorf (DE); WINDHÖVEL, Udo, Frank, D-40789 Monheim (DE)
(86) Internationale Anmeldenummer: EP9701338
(87) Internationale Veröffentlichungsnummer: WO9735818

(56) Entgegenhaltungen:
- EP-A- 0 594 026
- EP-A- 0 670 352
- DE-A- 3 106 413
- DE-A- 4 211 248

## Beschreibung

Die Erfindung betrifft eine Paste zum Grundieren von mineralischen und nichtmineralischen Untergründen für eine nachfolgende Spachtelung.

Wäßrige Polymerdispersionen haben in Bauten als Vorstrich oder Grundierung zur Vorbereitung von porösen oder dichten Untergründen vor Beschichtungs- bzw. Spachtel-, Verputz-, Klebe- und Tapezierarbeiten ein breites Anwendungsfeld gefunden. In Abhängigkeit von der Art des Basispolymeren und vom Festkörpergehalt und der Zusammensetzung der Zubereitung lassen sich Formulierungen finden, die den gestellten Anforderungen (Eindringvermögen in poröse Substrate, Staubbindung und Verfestigung labiler Oberflächen, Einstellen einer definierten Saugfähigkeit, Haftvermittlung zu nachfolgend einzusetzenden Werkstoffen) gerecht werden. Als Basisrohstoffe kommen grundsätzlich alle Polymere in Frage, die nach dem Fachmann geläufigen Verfahren durch radikalische Polymerisation, Polyaddition oder Polykondensation gewonnen werden können und als wäßrige Dispersion oder wasseremulgierbares Polymer anfallen.

Bevorzugt werden für den geschilderten Einsatzzweck Acrylester-Copolymerisate (z.B. Styrolacrylate), Ethylenvinylacetat-Copolymere oder Polychloroprenlatices eingesetzt. Das Basispolymer wird zur Einstellung bestimmter Eigenschaften wie Mindestfilmtemperatur (MFT), Filmhärte, Benetzungsverhalten, Entschäumung, Frostschutz und Konservierung mit geeigneten Additiven gemischt. Bekannt sind auch Mischungen aus mehr als einem Basispolymeren, die ebenfalls spezielle Additive enthalten können. Im folgenden werden derartige Zubereitungen, die dem Stand der Technik entsprechen, als "konventionelle" oder "herkömmliche" (Haft)grundierungen als Tiefengrund oder oft einfach als Vorstriche bezeichnet.
Grundierungen und Vorstriche von Untergründen für nachfolgende Spachtelung sind also üblicherweise mehr oder weniger stark verdünnte Polymerdispersionen, die mit Filmbildehilfsmitteln, Konservierungsmitteln, Entschäumen etc. konfektioniert werden. Als Polymere kommen insbesondere Styrol-Acrylat-Ccpolymere und Reinacrylatsysteme in Betracht.

Derartige Grundierungen werden direkt oder verdünnt auf den Untergrund (z.B. Zementestrich, Calciumsulfatestrich) aufgetragen und dienen u.a. als Haftbrücke für die anschließende Spachtelung mit einer vorzugsweise zementären Ausgleichsmasse. Herkömmliche Grundierungen besitzen den Vorteil, daß sie preisgünstig und mit einfachsten apparativen Aufwand aus marktgängigen, d.h. gut verfügbaren Polymerdispersionen, hergestellt werden können. Der Handwerker auf der Baustelle setzt die Produkte entsprechend der gestellten Aufgabe unverdünnt oder im vom Hersteller angegebenen Verhältnis mit Wasser verdünnt ein. Als nachteilig wird es oft empfunden, daß konventionelle Vorstriche in der Regel zu einem hohen oder zum überwiegenden Anteil aus Wasser bestehen, was einen in Relation zum Bindemittel, d.h. dem eigentlichen Wirkstoff, übermäßigen Verpackungsaufwand (voluminöse Kanister) erfordert, das Transportvolumen und -gewicht erhöht und übermäßigen Lagerraum beansprucht. Zudem führt der hohe Wassergehalt, der bei konventionellen Vorstrichen zwischen 40 und 95 Gew.-% beträgt, dazu, daß die heute aus Gründen des Arbeits-, Umwelt- und Verbraucherschutz bevorzugten, nach Technische Regeln "Gefahrstoffe" (TRGS) 610 als "lösemittelfrei" bezeichneten Produkte frostempfindlich sind. In konventionellen Vorstrichen, die über einen wirkungsvollen Frostschutz verfügen, müssen relativ hohe Anteile an flüchtigen Lösemitteln (Sdp. < 200 °C, z.B. Methanol, Ethylenglykol), die toxikologisch nicht unbedenklich sind, eingesetzt werden., Höhersiedende Verbindungen (Sdp. >200 °C, z.B. Diethylenglykol) zeigen eine geringere Frostschutzwirkung. Sie sind toxikologisch kaum weniger bedenklich und haben einen nachteiligen Einfluß auf die Eigenschaften (Kohäsion, Wasserfestigkeit) des getrockneten Vorstrichfilms.
- In der EP 670 352 A2 wird ein wasserdispergierbares Beschichtungsgranulat beschrieben, das aus einem rieselfähigen Bindemittel und weiteren Additiven besteht. Es hat einen Gehalt an freiem oder gebundenem Wasser von 0,01 bis 15 Gew.-% (siehe Erzeugnisanspruch 1). Nach dem unabhängigen Verfahrensanspruch 15 erhält man ein rieselfähiges Granulat mit einem Wassergehalt von 0,01 bis 15 Gew.-%.
- In der DE 42 11 248 A1 wird ein Trockenpulver beschrieben, welches zur Herstellung einer zur Vorbereitung eines zu verputzenden Untergrundes dienenden Aufbrennsperre geeignet ist. Die gebrauchsfertige Anmischung enthält 89 bis 99 Gew.-% Wasser.
- In der EP 594 026 A2 wird ein Polyvinylacetal beschrieben sowie die daraus hergestellten wäßrigen Dispersionen oder redispergierbaren trockenen Pulver. Der Feststoffgehalt der Dispersionen kann bis zu 60 Gew.-% betragen, vorzugsweise 5 bis 40 Gew.-%. Zu dem Wassergehalt des Trockenpulvers wird nichts ausdrücklich gesagt.

Die erfindungsgemäße Aufgabe bestand nun darin, diese Nachteile konventioneller Grundierungsmittel zu vermeiden, aber dennoch gute Applikationseigenschaften und Gebrauchseigenschaften zu ermöglichen.

Die erfindungsgemäße Lösung ist den Patentansprüchen zu entnehmen. Sie besteht im wesentlichen darin, daß die Paste zum Grundieren von mineralischen und nichtmineralischen Untergründen für eine nachfolgende Spachtelung, gekennzeichnet ist durch einen Gehalt von 20 bis 35 Gew.-% an Wasser und 80 bis 65 Gew.-% an Bindemittel, wobei das Bindemittel ein Redispersionsmittel enthält.

Bei dem Redispersionspulver handelt es sich um ein redispergierbares Dispersionspulver folgender Homo- und Copolymerisate: Vinylester-, Styrol-, Acrylat- und Vinylchlorid-Polymerisat: Als Basispolymerisat geeignete Vinylester-Polymerisate sind zu nennen: Vinylacetat-Homopolymere; Copolymere des Vinylacetats mit Ethylen und/oder Vinylchlorid und/oder weiteren Vinylestern, wie Vinyllaurat, Versaticsäurevinylestern, Vinylpivalat und/oder Estern von Maleinsäure/Fumarsäure; oder Homopolymerisate von Vinylestern von gesättigten C₃- bis C₈-Alkylcarbonsäuren oder deren Copolymerisate mit Ethylen, Vinylchlorid und/oder weiteren Vinylestern. Die (Meth)Acrylat- und/oder Styrol-(Co)-Polymerisate leiten sich ab von Polyme risaten aus Styrol und/oder Estern der Acrylsäure und/oder Methacrylsäure (hier als (Meth)Acrylat bezeichnet) mit geradkettigen, verzweigten oder cyclischen aliphatischen Alkoholen mit 1 bis 20 C-Atomen. Weitere Styrol-(Co)-Polymerisate können Styrol-Butadien-Copolymerisate sein. Als Vinylchlorid-Polymerisate sind Vinylchlorid-Ethylen-Copolymere geeignet.

Vorzugsweise eingesetzt werden Vinylacetat-Homopolymere, Vinylacetat-Ethylen-Copolymere oder Copolymere von Vinylestern von gesättigten C₃- bis C₈-Alkylcarbonsäuren und Ethylen mit einem Ethylengehalt von 1 bis 40 Gew.-% Ethylen und 0 bis 40 Gew.-% weiterer Vinylester aus der Gruppe der Vinylester von gesättigten C₃- bis C₈-Alkylcarbonsäuren und/oder Vinylchlorid; Styrol-Acrylate wie Styrol-Butylacrylat oder Styrol-Ethylhexyacrylat mit einem Styrolgehalt von 1 bis 70 Gew.-%. Diese redispergierenden Polymerisate werden üblicherweise durch Sprühtrocknung von Polymerdispersionen in Sprühtürmen hergestellt.

Das Redispersionspulver kann zusammen mit anderen Bestandteilen eines herkömmlichen Grundierungsmittels gemischt werden und als wasseremulgierbare Trocken-Mischung vertrieben werden. An Ort und Stelle wird dann durch Zugabe und Mischen mit Wasser ein gebrauchsfähiges Grundierungsmittel erhalten. Vorteilhafterweise wird man nicht bei jeder einzelnen Anwendung aus der Trocken-Mischung ein gebrauchsfertiges Grundierungsmittel herstellen, sondern zunächst aus etwa gleichen Gewichtsteilen Trocken-Mischung und Wasser eine Paste anmischen, die dann durch weitere Wasserzugabe leicht auf den benötigten Festkörpergehalt entsprechend der Saugfähigkeit des Untergrundes eingestellt werden kann. Wenn man so den gesamten Inhalt einer Verpackungseinheit zu einer Paste bearbeitet, vermeidet man sicher eine Separation der einzelnen Bestandteile der Trocken-Mischung, die sonst bei längerer Lagerung auftreten könnte.

Die erfindungsgemäße Lösung der erfindungsgemäßen Aufgabe besteht daher in einer Paste (Vorstrich-Konzentrat), die unter anderem das Redispersionspulver enthält, und als Haftgrundierung für eine nachfolgende Spachtelung von mineralischen und nichtmineralischen Untergründen geeignet ist. Diese Paste ist gekennzeichnet durch einen Gehalt von 20 bis 35 Gew.-% Wasser und 80 bis 65, vorzugsweise 80 bis 70 Gew.-% an Bindemittel. Die Gewichtsprozente beziehen sich nur auf die beiden Komponenten Wasser und Bindemittel, nicht auf die Hilfsstoffe. Diese Vorstrichpaste verbindet die Vorteile konventioneller Vorstriche mit denen der erfindungsgemäßen Trocken-Mischung in geradezu idealer Weise. Ein solches Produkt besteht aus einer oder mehreren wäßrigen Polymerdispersionen konventioneller Art, deren Festkörpergehalt sich durch Zumischen eines geeigneten Redispersionspulvers sowie gegebenenfalls notwendiger Hilfsstoffe nahezu beliebig erhöhen läßt. Auf diese Weise werden in Abhängigkeit von der Viskosität des redispergierten Pulvers und seinere Einsatzmenge hochkonzentrierte Vorstrichpasten oder noch flüssige Konzentrate erhalten, die unter üblichen Baustellenbedingungen vom Handwerker mit Wasser leicht auf die notwendige Verarbeitungskonsistenz gebracht werden können und die sich durch eine gute Lagerstabilität auszeichnen. Die haftvermittelnde Wirkung ist mit der von konventionellen Vorstrichen vergleichbar oder sogar überlegen. Der niedrige Wassergehalt von weniger als 35 Gew.-% ermöglicht eine Verpackung z.B. in Schlauchbeuteln und damit eine deutliche Reduzierung des Verpackungsaufwandes und der zu entsorgenden Verpackungsmenge. Zu dem erfüllen Vorstrichkonzentrate die Forderungen nach reduziertem Transportgewicht und Lagervolumen. Der deutlich reduzierte Wasseranteil führt außerdem zu einer reduzierten Frostempfindlichkeit bzw. erfordert geringe Einsatzmengen an Frostschutzmitteln.

Ein wesentlicher Bestandteil des Bindemittels ist das Redispersionspulver. Darüber hinaus kann die Paste auch konventionelle, also gelöste oder dispergierte Bindemittel enthalten, z.B. Styrol/Acrylat-Copolymerisate, Acrylsäureester-Copolymerisate und Ethylen/Vinylacetat/Acrylsäureestser-Terpolymerisate. Der Anteil des Redispersionspulvers am Bindemittel insgesamt beträgt bis zu 100 %, vorzugsweise bis zu 50 %, insbesondere bis zu 40 Gew.-%.

Außer dem Bindemittel können die Pasten noch folgende Hilfsmittel enthalten, um die Verarbeitung bzw. Gebrauchseigenschaften des Grundierungsmittels zu verbessern: Konservierungsmittel (z.B. Proxel AB), Netzmittel, Füllstoffe einschließlich faseriger Füllstoffe, Antiblockmittel, Filmbildehilfsmittel (z.B. Butyldiglykolacetat). Diese Hilfsmittel werden in einer Konzentration bis zu 5 Gew.-%, vorzugsweise in einer Konzentration von 0,2 bis 2 Gew.-% zugesetzt, bezogen auf das Konzentrat, ohne dessen Wassergehalt.

Das Redispersionspulver dient zur Grundierung von mineralischen und nichtmineralischen Untergründen. Durch den Vorstrich mit dem Grundierungsmittel wird vor allem die Haftung zwischen dem Untergrund und der nachfolgenden Spachtelmasse verbessert, und zwar vor allem bei dichten oder glatten Untergründen. Darüber hinaus werden noch Staubbindung und Reduktion der Saugfähigkeit des Estrichs bewirkt.

Unter mineralischen Untergründen werden vor allem saugfähige Zement-, Anhydrit- und Anhydrit-Fließestriche sowie Beton-Böden verstanden. Darüber hinaus kommen Altuntergründe wie z.B. Stein, Terrazzo- oder Keramikfliesen in Frage: .

Als nichtmineralischer Untergrund seien beispielhaft Holzspanplatten für Holzuntergründe genannt.
Die Untergründe können saugend oder nicht saugend sein.

Unter Ausgleich- bzw. Spachtelmassen werden üblicherweise mineralische, zement- oder calciumsulfatgebundene Systeme verstanden. Weitere Inhaltsstoffe können sein: Organische und anorganische Zuschlagstoffe, Verflüssiger, Beschleuniger, Verzögerer, Redispersionspulver u.a.. Die in Pulverform erhältlichen Mischungen werden mit einer genau vorgegebenen Menge Wasser versetzt und ergeben in der Regel dünnflüssige, selbstnivellierende Massen, die nach der Erhärtung fest mit dem Untergrund verbunden sind und zur Aufnahme von Bodenbelägen in idealer Weise geeignet sind. Ausgleich- bzw. Spachtelmassen für die Untergrundvorbereitung dienen zur Egalisierung von Unebenheiten und zum Einstellen einer definierten Saugfähigkeit des Untergrundes. Als besonders gut geeignete Spachtelmassen seien genannt: Thomsit D x Bodenausgleich oder DD Bodenausgleich der Firma Henkel KGaA.

Derartige Spachtelmassen haften auf den erfindungsgemäß grundierten Untergründen praktisch gleich gut oder besser als bei den konventionellen Grundierungen. Überraschend ist vor allem, daß trotz der Verwendung des Redispersionspulvers eine ausreichende Wasserfestigkeit der Grundierung erzielt wird. Es war nämlich zu befürchten, daß beim Beschichten mit den wasserhaltigen Spachtelmassen die Grundierung mit den Redispersionspulvern wieder rückgängig gemacht wird und die haftverbessernde Wirkung des Vorstriches ausbleibt. Diese Wasserfestigkeit ist deswegen so überraschend, weil die Trockenzeit nach Auftrag des Grundierungsmittels praktisch unverändert ist. Vor Auftrag der Spachtelmasse sollte das Grundierungsmittel je nach Untergrund ca. 1 bis 24 Stunden bei Normalklima trocknen. Die Zeitspanne bis zur Weiterverarbeitung richtet sich auch nach der folgenden Beschichtungsmasse.

Die Erfindung wird durch nachfolgende Beispiele im einzelnen erläutert.
I. Zusammensetzung der Grundierungen

| **1. Beispiel: konventioneller Vorstrich für mineralische Untergründe (BG)** | |
|---|---|
| Anteil in % | |
| Styrol-Acrylat-Dispersion (50%ig) | 40 |
| Filmbildehilfsmittel, z.B. Butyldiglykolacetat | 2 |
| Frostschutzmittel, z.B. Diethylenglykol | 3 |
| Konservierungsmittel | 0,1 |
| Wasser | 54,9 |
| Summe | 100,0 |

| | |
|---|---|
| Festkörper : | 20 % |
| Anwendung : 1:1 mit Wasser verdünnt | |
| Festkörper des gebrauchsfertigen Vorstrichs | 10 % |

| **2. Beispiel Vorstrichkonzentrat in Pastenform (EG 2)** | |
|---|---|
| | Anteil in % |
| Styrol-Acrylat-Dispersion (50%ig) | 48,5 |
| Acrylat-Copolymer-Dispersion (65%ig) | 15,0 |
| Dispersionspulver, z.B. Ethylen-Vinylacetat | 36,1 |
| Konservierungsmittel | 0,2 |
| Entschäumer | 0,2 |
| Summe | 100,0 |

| | |
|---|---|
| Festkörper : | 70 |
| Anwendung : 1 : 9 mit Wasser verdünnt | |
| Festkörper des gebrauchsfertigen Vorstrichs | 7 |

II. Untersuchung
Um die Wirksamkeit einer Grundierung zu prüfen, werden üblicherweise Haftzufestigkeiten ermittelt. Dazu wird der Vorstrich auf den Estrich aufgebracht und nach einer vorgegebenen Trocknungszeit mit der Boden-Ausgleichmasse von Henkel beschichtet. Nach Aushärtung der Masse werden sogenannte Haftzugstempel auf die Spachtelmassenoberfläche geklebt und anschließend mit einem Prüfgerät wieder abgezogen. Anhand der Ergebnisse (Bruchbild, Haftzugfestigkeit in N/mm²) können Rückschlüsse auf die Haftvermittlung aber auch auf die Wasserfestigkeit des Vorstrichs gezogen werden.
Wird die Grundierung vom Wasser aus der nachfolgend aufgebrachten Spachtelmasse angelöst, so fallen die Haftzugfestigkeiten in der Regel deutlich niedriger aus.
An der erfindungsgemäßen Rezeptur überraschend ist in diesem Zusammenhang insbesondere, daß trotz des hohen Anteils von Redispersionspulver (ca. 1/3 der Rezeptur, zum Vergleich: zementäre Spachtelmassen: ca. 2-7 %) die Haftzugfestigkeiten gleich gut oder besser sind als bei einer konventionellen Rezeptur.
Haftzugfestigkeiten in N/mm², gemessen in Anlehnung an DIN 1048.

| Estrichtyp (Fließestrich) | Untergrundvorbereitung | Grundierung | | |
|---|---|---|---|---|
| | | nein | BG | EG2 |
| Maxit | E1, nicht nicht geschliffen | 0,7 | 0,8 | 0,9 |
| | E1, geschliffen | 0,6 | 0,8 | 0,6 |
| Bayer | E2, nicht geschliffen | 0,3 | 0,7 | 0,8 |
| | E2, geschliffen | 0,5 | 0,7 | 0,7 |
| Knauf FE 25 | E3, nicht geschliffen | 0,6 | 1,0 | 1,0 |
| | E3, geschliffen | 0,5 | 1,2 | 1,3 |

Weiterhin ungewöhnlich ist die gute Viskositätskonstanz der erfindungsgemäßen Vorstrichpaste: Die Viskosität betrug anfangs 47 Pas, nach 7 Tagen Lagerung bei 50 °C < 55 Pas und nach 28 Tagen Lagerung bei 50 °C 53 Pas (Messung gemäß ISO 2555, Typ C, Spind el 2, 20 UpM 23 °C.
Das Lagerverhalten unterscheidet sich also nicht von dem üblicher Dispersionsprodukte.

## Patentansprüche

1. Paste zum Grundieren von mineralischen und nichtmineralischen Untergründen für eine nachfolgende Spachtelung, gekennzeichnet durch einen Gehalt von 20 bis 35 Gew.-% an Wasser und 80 bis 65 Gew.-% an Bindemittel, wobei das Bindemittel ein Redispersionspulver enthält.

2. Paste nach Anspruch 1, dadurch gekennzeichnet, daß a) ein Redispersionspulver auf der Basis folgender Polymerer: Acrylatcopolymerisate und Vinylestercopolymerisate, b) neben dem Redispersionspulver als weiteres Bindemittel mindestens eines der folgenden Polymere: Styrol-Acrylat-Copolymerisate, Acrylsäureestercopolymerisate und Ethylen-Vinylacetat-Acrylsäureester-Terpolymerisate und c) weitere Hilfsmittel, nämlich Konservierungsmittel, Entschäumer und Filmbildehilfsmittel, verwendet werden.

3. Paste nach Anspruch 1 oder 2, dadurch gekennzeichnet, daß man als Redispersionspulver ein Polymeres auf der Basis eines Ethylen-Vinylacetat-Copolymeren verwendet.

## Claims

1. A paste for preparing mineral and nonmineral substrates for subsequent surfacing, characterized by a content of 20 to 35% by weight of water and 80 to 65% by weight of binder, the binder being a redispersion powder.

2. A paste as claimed in claim 1, characterized by the use of a) a redispersion powder based on the following polymers: acrylate copolymers and vinyl ester copolymers; b) besides the redispersion powder, at least one of the following polymers as an additional binder: styrene/acrylate copolymers, acrylate copolymers and ethylene/vinyl acetate/acrylate terpolymers; and c) other auxiliaries, i.e. preservatives, defoamers and film formers.

3. A paste as claimed in claim 1 or 2, characterized in that a polymer based on an ethylene/vinyl acetate copolymer is used as the redispersion powder.

## Revendications

1. Pâte pour donner la couche de fond de substrats minéraux et non minéraux pour un badigeonnage ultérieur,
caractérisée par
une teneur de 20 à 35 % en eau et une teneur de 80 à 65 % en agent liant, dans lequel l'agent liant contient une poudre de remise en dispersion.

2. Pâte selon la revendication 1,
caractérisée en ce qu'
on utilise
a) une poudre de remise en dispersion à base de polymères suivants : copolymérisats d'acrylate et copolymérisat d'ester de vinyle,
b) à côté de la poudre de remise en dispersion comme agent liant supplémentaire au moins un des polymères suivants : copolymérisats styrène-acrylate, copolymérisats d'ester d'acide acrylique et terpolymérats éthylène-acétate de vinyle-ester d'acide acrylique et
c) d'autres adjuvants, principalement un agent conservateur, un agent anti-mousse et un adjuvant filmogène.

3. Pâte selon la revendication 1 ou 2,
caractérisée en ce qu'
on utilise comme poudre de remise en dispersion un polymère à base de copolymères éthylène-acétate de vinyle.
